## Europäisches Patentamt

## European Patent Office

## Office européen des brevets

(11) Veröffentlichungsnummer: **0 017 671**
**B1**

(12) **EUROPÄISCHE PATENTSCHRIFT**

(45) Veröffentlichungstag der Patentschrift:
**12.01.83**

(21) Anmeldenummer: **79105216.0**

(22) Anmeldetag: **17.12.79**

(51) Int. Cl.³: **C 08 J 9/14**, C 08 L 61/28

(54) Verfahren zur Herstellung von elastischen Schaumstoffen auf Basis eines Melamin/Formaldehyd-Kondensationsprodukts.

(30) Priorität: **17.04.79 DE 2915467**

(43) Veröffentlichungstag der Anmeldung:
**29.10.80 Patentblatt 80/22**

(45) Bekanntmachung des Hinweises auf die Patenterteilung:
**12.01.83 Patentblatt 83/2**

(84) Benannte Vertragsstaaten:
**AT BE CH DE FR GB IT NL SE**

(56) Entgegenhaltungen:
**DE-A-2 348 476**
**DE-C-870 027**
**US-A-3 063 953**

(73) Patentinhaber: **BASF Aktiengesellschaft,**
**Carl-Bosch-Strasse 38, D-6700 Ludwigshafen (DE)**

(72) Erfinder: **Mahnke, Harald, Dr., Osloer Weg 48,**
**D-6700 Ludwigshafen (DE)**
Erfinder: **Woerner, Frank Peter, Dr., Am Altenbach 18,**
**D-6706 Wachenheim (DE)**
Erfinder: **Weber, Heinz, Dr., Am Wehrhaus 26,**
**D-6718 Gruenstadt 1 (DE)**

Verfahren zur Herstellung von elastischen Schaumstoffen auf Basis eines Melamin/Formaldehyd-Kondensationsprodukts

Die Erfindung betrifft ein Verfahren zur Herstellung von elastischen Schaumstoffen auf Basis eines Melamin/Formaldehyd-Kondensationsproduktes, bei dem man eine hochkonzentrierte wässerige Lösung oder Dispersion verschäumt, welche ein Melamin/Formaldehyd-Vorkondensat, einen Emulgator, ein flüchtiges Treibmittel und einen Härter sowie ggf. übliche Zusatzstoffe enthält, und den Schaum anschliessend aushärtet.

Es ist bekannt, dass man Schaumstoffe auf Basis von Melaminharzen durch Verschäumen einer wässerigen Lösung eines Vorkondensats herstellen kann. Nach den DE-PS Nrn. 870027 und 1157385 wird Luft in eine wässerige Melaminharzlösung eingerührt, welche einen Emulgator und ein Härtungsmittel enthält. Die entstehenden Schaumstoffe sind jedoch hart und spröde und brechen leicht beim Verarbeiten. In der DE-AS Nr. 1297331 ist ein Verfahren zur Herstellung von Schaumstoffen aus Phenol-, Harnstoff- oder Melaminharzen beschrieben, bei dem eine wässerige Harzlösung, die ein Treibmittel und einen Härtungskatalysator enthält, verschäumt wird. Arbeitet man die Beispiele nach, so erhält man — wenn überhaupt — nur spröde Schaumstoffe, auch wenn man in den Rezepturen Phenol- bzw. Harnstoffharze durch Melaminharze ersetzt. In der US-PS Nr. 3093600 sind Melaminharzschäume beschrieben, die durch Einbau von Triolen, beispielsweise Trimethylolpropan, eine verbesserte Elastizität und Rissfestigkeit erhalten sollen. Es zeigt sich aber, dass die Elastizität und vor allem die Wiedererholung beim Stauchen solcher Schaumstoffe für viele Anwendungszwecke nicht ausreicht. Ausserdem verschlechtert sich beim Einbau grösserer Mengen an Triolen das Brandverhalten der Schaumstoffe erheblich. In der US-PS Nr. 3063953 ist ein Verfahren zur Verbesserung der mechanischen Festigkeit, Elastizität und Weichheit von Aminoplastharzschäumen, vorzugsweise solchen auf Basis von Harnstoffharzen, beschrieben. Mit diesem Verfahren kann man bei Melaminharzschäumen, die nach dem Stand der Technik hergestellt wurden, die genannten Eigenschaften zwar etwas, jedoch nicht entscheidend, verbessern.

In der DE-OS Nr. 2402441 ist ein Verfahren zur Herstellung von Aminoplastschaumstoffen beschrieben, bei dem einem alkalisch eingestellten, treibmittelhaltigen Aminoplastvorkondensat eine starke Säure als Härter zugesetzt wird. Durch die bei der Neutralisation freiwerdende Wärme wird das Treibmittel zum Sieden gebracht und damit das Schäumen bewirkt. Da bei dieser Arbeitsweise der Härtungsvorgang und der Schäumvorgang gleichzeitig ablaufen, entstehen verhältnismässig spröde Schaumstoffe.

Der Erfindung lag also die Aufgabe zugrunde, ein Verfahren zu entwickeln, mit dem man weiche und elastische, möglichst schwer entflammbare Schaumstoffe auf Basis von Melamin/Formaldehyd-Kondensationsprodukten erhält. Diese Aufgabe wird erfindungsgemäss dadurch gelöst, dass man eine verhältnismässig hochkonzentrierte Lösung oder Dispersion eines Melamin/Formaldehyd-Vorkondensats unter solchen Bedingungen verschäumt, dass zunächst nur ein geringer Viskositätsanstieg erfolgt und der Härtungsvorgang unter starker Viskositätserhöhung erst dann einsetzt, wenn der Schäumvorgang weitgehend beendet ist.

Gegenstand der Erfindung ist demzufolge ein Verfahren zur Herstellung von elastischen Schaumstoffen auf Basis eines Melamin/Formaldehyd-Kondensationsproduktes durch Verschäumen einer wässerigen Lösung oder Dispersion, welche ein Melamin/Formaldehyd-Vorkondensat, einen Emulgator, ein flüchtiges Treibmittel und einen Härter sowie ggf. übliche Zusatzstoffe enthält, und anschliessendes Aushärten des Schaums, das durch folgende Merkmale gekennzeichnet ist:

a) die Konzentration des Vorkondensats in der Mischung aus Vorkondensat und Wasser (ohne Zusatzstoffe) wird so gewählt, dass sie oberhalb der Knickstelle der 1. Ableitung der Kurve liegt, die man erhält, wenn man unter Konstanthaltung aller anderen Bedingungen in der Mischung aus Vorkondensat und Wasser die Wassermenge variiert, und dann die Viskosität der Mischung (gemessen bei der Siedetemperatur des Treibmittels unter den Bedingungen, die zu Beginn des Schäumvorgangs herrschen) aufträgt gegen die Konzentration des Vorkondensats, wobei aber die Konzentration des Vorkondensats nicht höher sein darf als der Wert, der in der beschriebenen Kurve einer Viskosität von 5000 dPas, vorzugsweise von 2000 und insbesondere von 100 dPas, entspricht,

b) während des Schäumvorgangs bis zu dem Zeitpunkt, zu dem der Schaum 80% der maximal erreichbaren Steighöhe erreicht hat, darf die Viskosität der wässerigen Lösung oder Dispersion einerseits den Wert nicht unterschreiten, welcher in der unter a beschriebenen Kurve der dort definierten Mindestkonzentration entspricht, und darf andererseits 6000 dPas, vorzugsweise 2500 und insbesondere 1200 dPas, nicht überschreiten, und

c) nach Erreichen des unter b definierten Zeitpunktes übersteigt die Viskosität durch Aushärten des Vorkondensats innerhalb von 8 min, vorzugsweise innerhalb von 6 und insbesondere innerhalb von 4 min, den Wert von 10 000 dPas, wobei in b und c die Viskositäten immer an einem parallel-laufenden treibmittelfreien System gemessen werden.

Bei diesem Verfahren erhält man überraschenderweise elastische, weiche Schaumstoffe, die bei der Anwendung als Dämmstoffe den Anforderungen genügen, die in der Bauindustrie an solche Materialien, insbesondere in bezug auf ihre Wärme- und Schalldämmwirkung, ihre mechanischen Eigenschaften und ihr Brandverhalten gestellt werden. Das Verschäumen von hochkonzentrierten Lösung oder Dispersionen muss als mutiger Schritt in technisches Neuland bezeichnet werden, da man bei Melaminharzen bisher immer vermieden hat, bei solch hohen Konzentrationen zu arbeiten, bei denen insbesondere die Dispersionen nicht lagerstabil sind.

Bei einer mikroskopischen Betrachtung der erfindungsgemäss hergestellten Schaumstoffe zeigt es sich, dass das Schaumgerüst eine Vielzahl miteinander verbundener, dreidimensional verzweigter Stege enthält (s. Abbildung 3). Melaminharzschäume sind nur dann ausreichend elastisch, wenn die Stege folgende Bedingungen erfüllen:

1. Das mittlere Länge/Dicke-Verhältnis muss grösser als 10:1, vorzugsweise grösser als 12:1 und insbesondere grösser als 15:1, sein.
2. Die Dichte der Stege muss grösser als 1,10, vorzugsweise grösser als 1,20, und insbesondere grösser als 1,30 g/cm³, sein.

Zu kurze Stege (mit zu geringem l:d-Verhältnis) erhält man, wenn der Härtungsvorgang zu früh einsetzt, bevor der Schäumvorgang im wesentlichen beendet ist. Eine zu niedrige Stegdichte deutet darauf hin, dass sich im Inneren der Stege kleine Hohlräume, Blasen befinden, die von einer Sekundärschäumung herrühren. Eine solche Sekundärschäumung tritt ein, wenn der Wassergehalt des Melaminharzvorkondensats zu hoch war. In beiden Fällen werden spröde Schaumstoffe erhalten.

Das mittlere l:d-Verhältnis wird mikroskopisch bestimmt, wobei die Steglänge und -dicke nach einem statistischen Auszählverfahren ermittelt werden. Als Steglänge ist der Abstand zwischen den Mittelpunkten zweier Knotenstellen und als Stegdicke an der schmälsten Stelle eines Stegs, jeweils gemessen an der mikroskopischen Aufnahme, definiert. Zur Bestimmung der Dichte der Schaumstoffstege wird der Schaumstoff in eine geeignete Flüssigkeit, z.B. Isopropanol, gelegt, mit der er sich aufgrund seiner Offenzelligkeit vollsaugt. Die Dichte der Stege wird dann nach dem archimedischen Prinzip bestimmt.

Bei dem erfindungsgemässen Verfahren geht man aus von einem Melamin/Formaldehyd-Vorkondensat. Das Molverhältnis Melamin zu Formaldehyd kann dabei in weiten Grenzen zwischen 1 zu 1,5 und 1 zu 4 schwanken, vorzugsweise liegt es zwischen 1 zu 2,0 und 1 zu 3,5. Der Kondensationsgrad des Vorkondensats soll so niedrig sein, dass eine Aushärtung unter Weiterkondensation möglich ist. Das mittlere Molekulargewicht kann — osmometrisch gemessen — zwischen 200 und 1000, vorzugsweise zwischen 250 und 800, liegen.

Die wässerige Lösung bzw. Dispersion des Melaminharzes enthält einen Emulgator, vorzugsweise in einer Menge von 0,5 bis 5 Gew.% und insbesondere von 1,0 bis 3,0 Gew.%, bezogen auf das Harz. Der Emulgator soll bewirken, dass das organische Treibmittel in der wässerigen Lösung bzw. Dispersion homogen verteilt wird; er sorgt also für die Stabilität des Systems und verhindert eine Entmischung während des Schäumvorgangs, was einen inhomogenen Schaum zur Folge hätte. Je höher die Schäumtemperatur ist, desto wirksamer muss der Emulgator sein und in desto höherer Konzentration sollte er vorliegen. Der Emulgator wirkt ausserdem als Keimbildner beim Schäumprozess. In Frage kommen anionenaktive Verbindungen, wie insbesondere Metallsalze, vorzugsweise Natriumsalze von Alkylsulfonaten und Alkylarylsulfonaten mit 8 bis 20 C-Atomen im Alkylrest; daneben sind auch Metallsalze von Sulfobernsteinsäureestern, sulfierten Ricinusölen, Alkylnaphthalinsulfonsäuren, Phenolsulfonsäuren, Schwefelsäureestern, z.B. von $C_{12}$- bis $C_{18}$-Alkylhydrogensulfaten und $C_{16}$- bis $C_{18}$-Fettalkoholhydrogensulfaten geeignet; ferner kationenaktive Verbindungen, wie Ölsäuretriäthanolaminester oder Laurylpyridiniumchlorid; und nicht ionogene Verbindungen wie äthoxyliertes Ricinusöl, äthoxylierte Talgfettalkohole, äthoxylierte Stearinsäure oder Ölsäure sowie äthoxyliertes Nonylphenol.

Die wässerige Lösung bzw. Dispersion enthält ferner ein flüchtiges Treibmittel, vorzugsweise mit einem Siedepunkt zwischen −20 und +100°C, insbesondere zwischen +20 und +80°C. In Frage kommen z.B. Kohlenwasserstoffe, halogenierte Kohlenwasserstoffe, Alkohole, Ketone, Äther und Ester. Bevorzugte Treibmittel sind Pentan, Hexan, Trichlorfluormethan und Trichlortrifluoräthan. Die Treibmittelmenge richtet sich nach der gewünschten Dichte des Schaumstoffs, sie kann zwischen 1 und 50 Gew.%, vorzugsweise zwischen 5 und 40 Gew.%, bezogen auf das Harz, liegen.

Als Härter werden Verbindungen eingesetzt, welche bei Reaktionsbedingungen Protonen abspalten oder bilden, die dann die Weiterkondensation des Melaminharzes katalysieren. Die Mengen liegen zwischen 0,01 und 20, vorzugsweise zwischen 0,05 und 5 Gew.%, bezogen auf das Harz. In Frage kommen anorganische und organische Säuren, z.B. Salzsäure, Schwefelsäure, Phosphorsäure, Ameisensäure, Essigsäure, Oxalsäure, Milchsäure, Aminosäuren; latente Härter, wie Halogencarbonsäuresalze, Chloresigsäureamid, Hydrogenphosphate, Säureanhydride und Ammoniumsalze. Auch Formaldehyd selbst kann bei hohen Temperaturen unter Bildung von Ameisensäure disproportionieren und so als Härter wirken.

Die wässerige Lösung bzw. Dispersion ist vorzugsweise frei von Zusatzstoffen. Für manche Zwecke kann es jedoch günstig sein, bis zu 20 Gew.%, vorzugsweise weniger als 10 Gew.%, bezogen auf das Harz, üblicher Zusatzstoffe, wie faser- oder pulverförmiger anorganischer Verstärkungsmittel oder Füllstoffe, Pigmente, Farbstoffe, Flammschutzmittel, Weichmacher, Mittel zur Herabsetzung der Brandgastoxizität oder zur Förderung der Verkohlung zuzusetzen. Da die Schaumstoffe offenporig sind und Wasser aufnehmen können, kann es für manche Anwendungszwecke notwendig sein, Hydrophobierungsmittel in Mengen von 0,2 bis 5 Gew.% zuzusetzen. In Frage kommen dabei z.B. Alkylphenole mit 5 bis 15 C-Atomen im Alkylrest, Silikone und Paraffine.

Die Zusatzstoffe werden mit der wässerigen Lösung oder Dispersion des Melaminharzes homogen vermischt, wobei das Treibmittel ggf. auch unter Druck eingepresst werden kann. Man kann jedoch auch von einem festen, z.B. sprühgetrockneten Melaminharz ausgehen und dieses dann mit dem Treibmittel und einer wässerigen Lösung des Emulgators und des Härters vermischen. Bei der Zugabe der Komponenten richtet sich die Reihenfolge nach dem gewählten Mischverfahren. Die Mischung wird auf die Siedetemperatur des Treibmittels in der Lösung bzw. Dispersion beim jeweils herrschenden Druck gebracht. Dies kann durch Erhitzen, z.B. mit Heissluft, Wasserdampf oder Hochfrequenzstrahlung oder auch durch Ausnutzen von Reaktionswärme geschehen. Dabei geht das Treibmittel in den gasförmigen Zustand über und kann das Schäumen bewirken. Während des isotherm ablaufenden Schäumvorgangs nimmt die wässerige Lösung bzw. Dispersion die Siedetemperatur des Treibmittels beim jeweils herrschenden Druck an. Bevorzugt wird unter Normaldruck bei einer Massetemperatur von 20 bis 80°C gearbeitet, wobei die Umgebungstemperatur weit höher liegen kann.

Ein kritisches Merkmal a der vorliegenden Erfindung ist die Konzentration des Vorkondensats in der Mischung aus Vorkondensat und Wasser (ohne Zusatzstoffe). Die optimale Konzentration ist für jede Schäumtemperatur anders, richtet sich also nach der Art des Treibmittels. Für die Mindestkonzentration gilt erfindungsgemäss folgende Bedingung: Sie soll oberhalb der Knickstelle der 1. Ableitung der Kurve liegen, die man erhält, wenn man unter Konstanthaltung aller anderen Bedingungen in der Mischung aus Vorkondensat und Wasser die Wassermenge variiert, und dann die Viskosität der Mischung (gemessen bei der Siedetemperatur des Treibmittels unter den Bedingungen, die zu Beginn des Schäumvorgangs herrschen) aufträgt gegen die Konzentration des Vorkondensats. In der Praxis geht man zur Bestimmung der Mindestkonzentration so vor, dass man Mischungen aus Vorkondensat und Wasser mit verschiedenen Wassergehalten herstellt, und diese Mischungen dann auf die Temperatur erhitzt, bei der das Treibmittel unter dem für den Beginn des Schäumvorgangs vorgesehenen Druck sieden würde. Für jede Konzentration des Melaminharzes wird nun unter diesen Bedingungen die zugehörige Viskosität gemessen. Die gemessene Viskosität wird dann gegen die gewählte Konzentration aufgetragen. Die dabei erhaltene Kurve hat zunächst die Form einer flach ansteigenden Gerade, sie steigt dann immer stärker an und nimmt schliesslich einen parabelförmigen Verlauf an. Von dieser Kurve bildet man graphisch die 1. Ableitung. Diese hat zunächst die Form einer waagrecht verlaufenden Gerade, sie hat dann einen kurvenförmig verlaufenden Knickbereich und geht schliesslich in eine steil ansteigende Gerade über. Der Knickbereich erstreckt sich im allgemeinen höchstens über einen Bereich von etwa 1% für die Konzentration des Vorkondensats. Dieser Bereich stellt die Mindestkonzentration für das Melaminharz dar. Will man die Knickstelle noch schärfer festlegen, so verlängert man in der Kurve, die die 1. Ableitung darstellt, die Geraden und ermittelt deren Schnittpunkt. Die obere Grenze für die Konzentration des Melaminharzes ist durch folgende Bedingung gegeben: Sie darf nicht höher sein als der Wert, der in der beschriebenen Kurve einer Viskosität von 5000 dPas, vorzugsweise 2000 und insbesondere 1000 dPas, entspricht.

Für die bevorzugten Treibmittel können folgende bevorzugte Harzkonzentrationen angegeben werden, die innerhalb des oben definierten Bereiches liegen:

n-Pentan: 70 bis 80, vorzugsweise 72 bis 79 und insbesondere 73 bis 78,5 Gew.%,

n-Hexan: 73 bis 85, vorzugsweise 74 bis 84 und insbesondere 78 bis 83 Gew.%,

Trichlorfluormethan: 68 bis 78, vorzugsweise 69 bis 77 und insbesondere 70 bis 76 Gew.%, und Trichlortrifluoräthan: 72 bis 82, vorzugsweise 74 bis 80 Gew.%.

Die Konzentrationsangaben beziehen sich dabei wieder auf die Mischung aus Vorkondensat und Wasser ohne Zusatzstoffe.

Das zweite kritische Merkmal b der Erfindung besteht darin, dass während des Schäumvorgangs bis zu dem Zeitpunkt, zu dem der Schaum 80% der maximal erreichbaren Steighöhe erreicht hat, die Viskosität der wässerigen Lösung oder Dispersion einerseits den Wert nicht unterschreiten darf, welcher in der unter a beschriebenen Kurve der dort definierten Mindestkonzentration entspricht, und andererseits 6000 dPas nicht überschreiten darf.

Das dritte kritische Merkmal c besagt, dass nach Erreichen des unter b definierten Zeitpunktes die Viskosität durch Aushärten des Vorkondensats innerhalb von 8 min, vorzugsweise innerhalb von 6 und insbesondere innerhalb von 4 min, den Wert von 10 000 dPas überstiegen haben muss, d.h., dass das Harz innerhalb dieses Zeitraums ausgehärtet sein muss. Die beiden Bedingungen b und c gewährleisten, dass Schäumen und Aushärten richtig aufeinander abgestimmt sind; sie können bei vorgegebenem Treibmittel und damit vorgegebener Schäumtemperatur durch die richtige Wahl der Art und Menge des Härters erfüllt werden. In der Praxis setzt man zwei wässerige Lösungen bzw. Dispersionen an, von denen die eine das Melaminharz in der nach a ermittelten Konzentration, den Emulgator und den Härter sowie das Treibmittel und ggf. Zusatzstoffe enthält, und die andere die gleichen Bestandteile, jedoch kein Treibmittel enthält. Dann werden beide Systeme auf Schäumtemperatur gebracht. Der Parallelansatz mit der treibmittelfreien Lösung bzw. Dispersion muss deshalb gemacht werden, weil das treibmittelhaltige System unter diesen Bedingungen schäumt und sich darin die Viskosität nicht messen lässt. Bei dem ersten System wird die Steighöhe des Schaums gegen die Zeit aufgetragen und so der Zeitpunkt ermittelt, zu dem der Schaum 80% der maximal erreichbaren Steighöhe erreicht hat. An dem zweiten System wird die Viskosität in Abhängigkeit von der Zeit gemessen. Dann wird geprüft, ob dabei die unter b und c aufgestellten Forderungen erfüllt sind. Sollte dies nicht der Fall sein, müssen die Bedingungen für den Aushärtvorgang variiert werden, was am besten durch Variation der Art oder Menge des Härters erfolgen kann und — falls erforderlich — auch durch Wahl eines anderen Treibmittels und damit einer anderen Schäumtemperatur. In diesem Fall müsste dann aber wieder nach a die optimale Konzentration des Melaminharzes neu bestimmt werden.

Ein elastischer, stabiler Schaum mit niedriger Dichte wird nur dann erhalten, wenn man beim Schäumen und Aushärten innerhalb der unter a, b und c geforderten Bedingungen arbeitet. Wählt man die Ausgangskonzentration des Melaminharzes zu niedrig, oder sinkt die Viskosität vor Erreichen von 80% der maximalen Steighöhe des Schaums unter die definierte Anfangsviskosität, so erhält man — wie bei den Verfahren nach dem Stand der Technik — spröde Schaumstoffe. Setzt man von vornherein zu hoch viskose Lösungen oder Dispersionen ein, oder steigt die Viskosität bereits vor Erreichen von 80% der maximalen Steighöhe des Schaums über die definierte zulässige Grenze, dann reicht der Blähdruck nicht mehr für ein einwandfreies Schäumen aus, und es werden Schaumstoffe mit zu hoher Dichte und nicht ausreichender Elastizität erhalten. Erfolgt nach Erreichen von 80% der maximalen Steighöhe des Schaums der Viskositätsanstieg nicht rasch genug, d.h. härtet der Schaum nicht rasch genug aus, dann kollabiert er, und es entsteht ein spröder, inhomogener Schaumstoff mit zu hoher Dichte.

Es ist bevorzugt, den Druck in der Schäumapparatur und damit auch die Massetemperatur während des Schäumvorgangs konstant zu halten. Bei speziellen Ausführungsformen des Verfahrens können diese Bedingungen jedoch auch im Verlauf des Schäumprozesses verändert werden. Der Schäumprozess dauert im allgemeinen 20 s bis 20 min, vorzugsweise 30 s bis 10 min, je nach der Art und Intensität der Beheizung. Er ist dann abgeschlossen, wenn das Schaumharz voll ausgeschäumt und soweit ausgehärtet ist, dass es seine Form behält.

Bei einer bevorzugten Ausführungsform der Erfindung wird der fertige Schaumstoff noch einer Temperaturbehandlung unterworfen. Er wird dabei 1 min bis 180 min, vorzugsweise 5 bis 60 min lang auf Temperaturen zwischen 120 und 300°C, vorzugsweise zwischen 150 und 250°C, erhitzt, wobei Wasser, Treibmittel und Formaldehyd weitgehend entfernt werden, und eine Nachhärtung des Schaumharzes erfolgt. Diese Temperaturbehandlung kann unmittelbar anschliessend an die Schaumherstellung in der selben Apparatur oder in einer nachgeschalteten Apparatur erfolgen; sie kann aber auch zu einem späteren Zeitpunkt unabhängig vom Schäumprozess durchgeführt werden. Getemperte Schaumstoffe zeigen eine wesentlich geringere Neigung zum Schrumpfen und zur Wasseraufnahme als ungetemperte Produkte. Auch die Formaldehydemission ist stark verringert.

Bei einer weiteren bevorzugten Ausführungsform der Erfindung presst man den Schaumstoff vor oder nach dem eventuellen Tempern ein oder mehrere Male um 40 bis 90% seiner ursprünglichen Höhe zusammen und lässt ihn sich dann wieder ausdehnen. Durch diesen Walkprozess werden vermutlich Reste von harten Bereichen im Zellgerüst zerstört. Dies führt zu einer Erhöhung der Elastizität des Schaums und zu geringerem Schrumpfen bei der Wärmelagerung.

Die erfindungsgemäss hergestellten Schaumstoffe zeichnen sich durch folgende Eigenschaften aus:

a) ihre Rohdichte nach DIN 53 420 liegt zwischen 4 und 80, vorzugsweise zwischen 8 und 40 $g \cdot l^{-1}$,

b) die Wärmeleitzahl nach DIN 52 612 ist kleiner als 0,06, vorzugsweise kleiner als 0,04 $W \cdot m^{-1} \cdot °K^{-1}$,

c) die Stauchhärte nach DIN 53 577 bei 60% Stauchung, dividiert durch die Rohdichte, liegt unter 0,3, vorzugsweise unter 0,2 $N \cdot cm^{-2}/g \cdot l^{-1}$, wobei bei der Bestimmung der Stauchhärte bei 60% Stauchung eine Wiederholung des Schaumstoffs auf mindestens 70%, vorzugsweise mindestens 90% seiner ursprünglichen Abmessung erfolgen muss,

d) der Elastizitätsmodul in Anlehnung an DIN 53 423, dividiert durch die Rohdichte, liegt unter 0,25, vorzugsweise unter 0,15 $N \cdot mm^{-2}/g \cdot l^{-1}$,

e) der Biegeweg beim Bruch nach DIN 53 423 ist grösser als 6, vorzugsweise grösser als 12 mm,

f) die Zugfestigkeit nach DIN 53 571 beträgt vorzugsweise mindestens 0,07, insbesondere mindestens 0,1 $N \cdot mm^{-2}$,

g) sie sind nach DIN 4102 mindestens normalentflammbar, vorzugsweise schwerentflammbar.

Das erfindungsgemässe Verfahren kann diskontinuierlich oder kontinuierlich durchgeführt werden. Bei der bevorzugten kontinuierlichen Arbeitsweise wird zweckmässigerweise die wässerige Lösung oder Dispersion auf ein kontinuierlich laufendes, vorzugsweise beheiztes Metallband aufgetragen, dort gleichmässig verteilt und in einem Heizkanal verschäumt und gehärtet. Um zu verhindern, dass sich an der Oberfläche des Schaums eine spröde Haut ausbildet, kann man den Schäumvorgang zweckmässigerweise zwischen zwei mit dem Metallband gleichlaufenden Kunststoffolien durchführen. Daran kann sich dann unmittelbar der Temperier- und/oder Walkvorgang anschliessen.

Die Schaumstoffe können als Platten oder Bahnen mit einer Dicke von 50 cm oder darüber hergestellt werden oder als Schaumfolien mit einer Dicke von wenigen Millimetern. Bei diskontinuierlicher Herstellungsweise können auch Formteile erhalten werden. Die Schaumstoffe können ein- oder beidseitig mit Deckschichten versehen oder kaschiert werden, z.B. mit Papier, Pappe, Glasvlies, Holz, Gipsplatten, Metallblechen oder -folien, Kunststoffolien, die ggf. auch geschäumt sein können.

Das Hauptanwendungsgebiet der erfindungsgemäss hergestellten Schaumstoffe ist die Wärme- und Schalldämmung von Gebäuden und Gebäudeteilen, insbesondere von Zwischenwänden, aber auch von Dächern, Fassaden, Türen und Fussböden; weiterhin die Wärme- und Schalldämmung von Fahrzeugen und Flugzeugen sowie die Tieftemperaturisolierung, z.B. von Kühlhäusern, Öltanks und Behältern von Flüssiggas. Weitere Anwendungsgebiete sind die Verwendung als isolierende Wandverkleidung sowie als isolierendes und stossdämmendes Verpackungsmaterial.

Die in den Beispielen genannten Teile, Prozente und Verhältnisse beziehen sich auf das Gewicht.

*Beispiel 1*

In einem offenen Gefäss wurde ein sprühgetrocknetes Melamin/Formaldehyd-Vorkondensat (Molverhältnis 1:3, Molekulargewicht etwa 400) zu einer wässerigen Lösung mit 3% Ameisensäure und 1,5% des Natriumsalzes eines Gemisches von Alkylsulfonaten mit 12 bis 18 C-Atomen im Alkylrest (Emulgator K 30 der Firma Bayer AG) gegeben, wobei die Prozentzahlen auf das Melaminharz bezogen sind. Die Konzentration des Harzes, bezogen auf die Mischung aus Harz und Wasser, betrug 74,0%. Die Mischung wurde kräftig gerührt, dann wurden 20% Pentan zugegeben. Es wurde so lange (etwa 3 min lang) weitergerührt, bis eine homogene Dispersion entstand. Diese wurde auf tefloniertes Glasgewebe als Trägermaterial aufgerakelt und in einem Trockenschrank, in dem eine Lufttemperatur und 150° C herrschte, aufgeschäumt und gehärtet. Dabei stellte sich als Massetemperatur im Schaum die Siedetemperatur des Pentans ein, die unter diesen Bedingungen 37,0° C betrug. Nach 4½ min hatte der Schaum 80% seiner maximalen Steighöhe erreicht, nach 7 bis 8 min war die maximale Steighöhe erreicht. Der Schaum wurde noch weitere 10 min bei 150° C im Trockenschrank belassen. Anschliessend wurde er 30 min lang bei 180° C getempert. Eigenschaften siehe Tabelle 1.

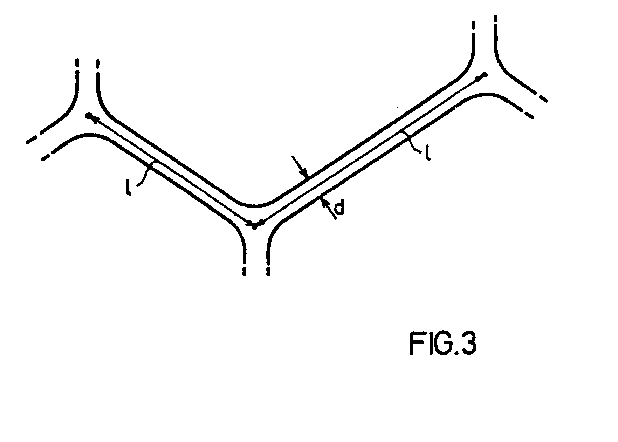

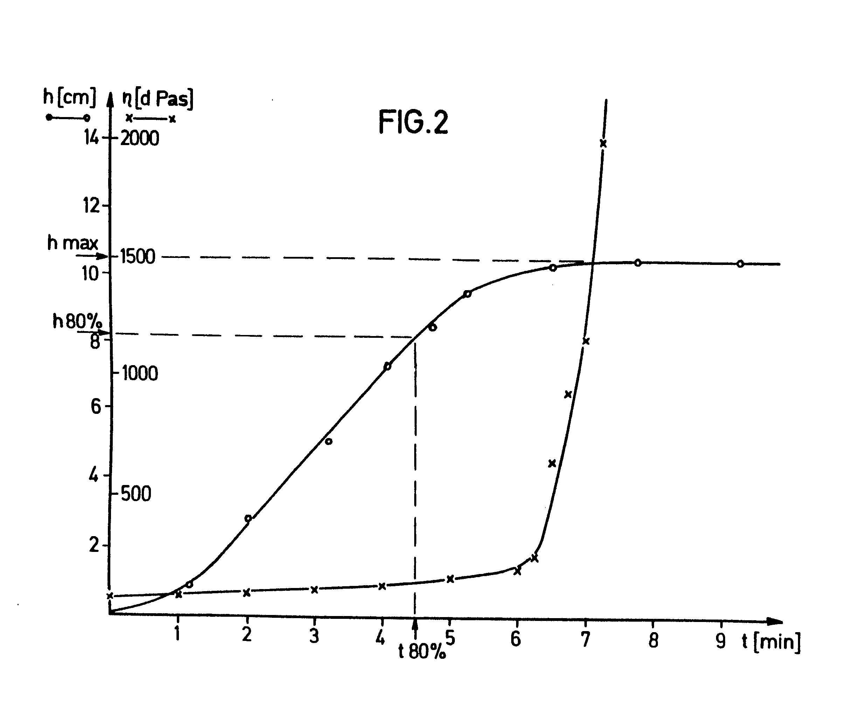

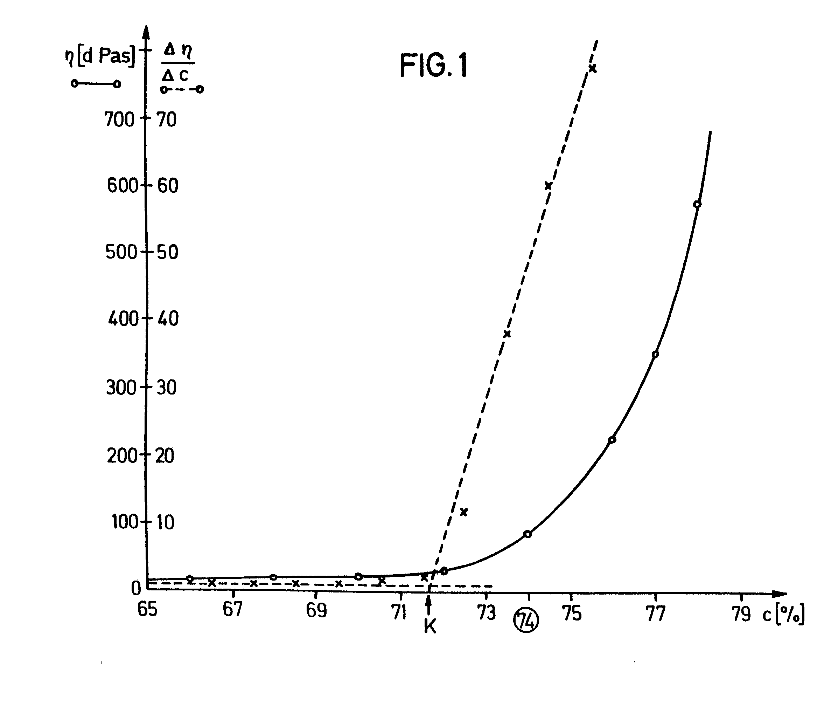

Zur Ermittlung der optimalen Melaminharzkonzentration war vor dem Schäumvorgang die Abhängigkeit der Viskosität der Dispersion von der Melaminharzkonzentration auf folgende Weise gemessen worden: Es wurden Mischungen aus dem Melaminharzvorkondensat und Wasser in verschiedenen Mischungsverhältnissen hergestellt. Die Mischungen wurden dann auf 37,0° C erhitzt, dabei wurde die Viskosität der Mischungen mit einem Rotationsviskosimeter bestimmt. In einem Diagramm (s. Fig. 1) wurde die Viskosität $\eta$ in dPas gegen die Konzentration c in Gewichtsprozent Feststoff aufgetragen; von der erhaltenen Kurve wurde graphisch die 1. Ableitung

$$\frac{\Delta\eta}{\Delta c}$$

gebildet und in das Diagramm in Form von zwei sich bei der Knickstelle K schneidenden Geraden eingezeichnet. Die Knickstelle liegt in diesem Fall bei einer Konzentration von 71,7%. Die Kurve verläuft asymptotisch auf einen Konzentrationswert von etwa 80% zu, so dass die bevorzugte maximale Viskosität von 1000 dPas etwa einer Konzentration von 79% entspricht. Für den Schäumvorgang des Beispiels wurde eine Konzentration gewählt, die etwa in der Mitte zwischen diesen Werten, nämlich bei 74,0%, liegt. Die zugehörige Viskosität beträgt 88 dPas.

Die Mengenverhältnisse der Komponenten in der zu verschäumenden Mischung wurden nun so gewählt, dass das Verhältnis Melaminharz zu Wasser (inclusive des durch den Härter und den Emulgator eingebrachten Wassers) 74 zu 26 betrug. Vor dem eigentlichen Schäumvorgang wurde in zwei Probeansätzen die maximale Steighöhe und die Abhängigkeit der Viskosität von der Zeit bestimmt. Dabei wurde die oben angegebene Mischung einmal mit und einmal ohne Treibmittelzusatz auf Schäumtemperatur erhitzt. Die Fig. 2 zeigt ein Diagramm, bei dem die Steighöhe h und die Viskosität $\eta$ über die Zeit t aufgetragen sind. Die maximale Steighöhe beträgt 10,25 cm; 80% der maximalen Steighöhe sind nach 4½ min erreicht. Zu dieser Zeit beträgt die Viskosität 170 dPas. Nach weiteren 3 min hatte die Viskosität einen Wert von 10 000 dPas überstiegen.

*Beispiel 2*

Es wurde gearbeitet wie in Beispiel 1, wobei aber statt 20% nur 13% Pentan eingesetzt wurden.

*Beispiel 3*

Es wurde gearbeitet wie in Beispiel 1, wobei als Säure 3% Schwefelsäure, als Emulgator 1,5% Natriumdodecylbenzolsulfonat und als Treibmittel 28% Trichlortrifluoräthan eingesetzt wurden. Die Harzkonzentration betrug 76%. Die Massetemperatur beim Schäumen lag bei 47° C. Der Schaum wurde nicht getempert.

*Beispiel 4*

Es wurde gearbeitet wie in Beispiel 1, wobei 6% Phosphorsäure, 1,5% Natriumlaurylsulfonat und 12% Pentan verwendet wurden. Es wurde ein Melaminharz eingesetzt, in dem das Molverhältnis Melamin zu Formaldehyd 1 zu 3,5 betrug. Die Harzkonzentration war 74%. Der Schaum wurde nicht getempert.

*Beispiel 5*

In einem offenen Gefäss wurden zu einer Lösung eines Melaminharzes 2,8% Ameisensäure und 1,4% des Alkylsulfonats aus Beispiel 1 — bezogen auf das Harz — zugesetzt. Die Konzentration des Harzes, bezogen auf die Mischung aus Harz und Wasser, betrug 75,5%. Unter kräftigem Rühren wurden 20% Pentan zugegeben. Das Schäumen, Aushärten und Tempern erfolgte wie in Beispiel 1.

*Beispiel 6*

Es wurde gearbeitet wie in Beispiel 5, wobei ein Harz mit einem Molverhältnis Melamin zu Formaldehyd von 1 zu 2,5 eingesetzt wurde. Die Konzentration des Harzes betrug 76%. Als Härter wurden 0,20 Ameisensäure, als Emulgator 3% des Alkylsulfonats aus Beispiel 1, zusammen mit 0,3% eines niedrig äthoxylierten gesättigten Fettalkohols und als Treibmittel 23% n-Hexan verwendet. Die Massetemperatur beim Schäumen betrug 69,0° C. Der Schaum wurde wie in Beispiel 1 getempert.

*Beispiel 7*

Auf ein kontinuierlich laufendes Metallband wurde die homogene Mischung des Beispiels 1 aufgetragen. Das Band lief mit einer Geschwindigkeit von 0,4 m·min⁻¹. Es war auf etwa 130°C beheizt. Die Mischung wurde auf dem Band mit Hilfe eines Rakels auf eine Schichtdicke von etwa 2 mm gleichmässig verteilt. In einem mit 150°C heisser Luft beheizten Schäumkanal wurde die Mischung verschäumt, wobei sich eine Massetemperatur von 37,0°C einstellte. Nach etwa 4½ min waren 80% der endgültigen Steighöhe des Schaums und nach etwa 6 min war die endgültige Schaumdicke von 15 cm erreicht. Anschliessend wurde der Schaum weitere 7 min lang durch den Schäumkanal geführt, wobei die Massetemperatur auf etwa 98°C anstieg. Der Schaumstoff wurde noch 15 min lang bei einer Massetemperatur von etwa 170°C getempert und anschliessend besäumt.

*Beispiel 8*

Es wurde wie in Beispiel 6 gearbeitet, wobei ein Harz mit einem Molverhältnis Melamin/Formaldehyd von 1:2,0 eingesetzt wurde. Die Konzentration des Harzes betrug 80%. Als Härter wurden 2,5% Ameisensäure, als Emulgator ein Gemisch aus 0,6% diisobutylnaphthalinsulfonsauren Natriums und 1,6% eines niedrig äthoxylierten gesättigten Fettalkohols, und als Treibmittel 16% Pentan verwendet.

*Beispiel 9*

Es wurde wie in Beispiel 1 gearbeitet, wobei als Säure 1,8% Ameisensäure und als Emulgator 2,2% Natriumdodecylbenzolsulfonat eingesetzt wurden. Die Temperung wurde bei 190°C durchgeführt.

*Tabelle*

| Beispiel | Rohdichte $(g \cdot l^{-1})$ | Wärmeleitzahl $(W \cdot m^{-1} \cdot °K^{-1})$ | Stauchhärte $(N \cdot cm^{-2})$ | $\dfrac{\text{Stauchhärte}}{\text{Rohdichte}}$ | Wiedererholung (%) |
|---|---|---|---|---|---|
| 1 | 13 | 0,0325 | 1,3 | 0,10 | >90 |
| 2 | 20 | 0,032 | 3,0 | 0,15 | >90 |
| 3 | 30 | 0,033 | 5,5 | 0,18 | >90 |
| 4 | 28 | 0,033 | 5,0 | 0,18 | >90 |
| 5 | 13 | 0,034 | 1,2 | 0,09 | >90 |
| 6 | 14 | 0,034 | 1,3 | 0,09 | >90 |
| 7 | 12 | 0,032 | 1,2 | 0,10 | >90 |
| 8 | 17 | 0,034 | 1,3 | 0,08 | >90 |
| 9 | 12 | 0,036 | 2,2 | 0,18 | >90 |

*Fortsetzung der Tabelle*

| Beispiel | Elastizitätsmodul $(N \cdot mm^{-2})$ | $\dfrac{\text{E-Modul}}{\text{Rohdichte}}$ | Biegeweg (mm) | Zugfestigkeit $(N \cdot mm^{-2})$ | Brandverhalten |
|---|---|---|---|---|---|
| 1 | <1,0 | 0,08 | >20 | 0,12 | schwerentflammbar |
| 2 | 2,0 | 0,10 | 15 | 0,12 | schwerentflammbar |
| 3 | 3,5 | 0,12 | 11 | 0,12 | schwerentflammbar |
| 4 | 3,0 | 0,11 | >12 | 0,10 | schwerentflammbar |
| 5 | <1,0 | 0,08 | >20 | 0,11 | schwerentflammbar |
| 6 | 1,0 | 0,07 | >20 | 0,12 | schwerentflammbar |
| 7 | <1,0 | 0,085 | 23 | 0,13 | schwerentflammbar |
| 8 | 2,5 | 0,15 | 10 | 0,07 | schwerentflammbar |
| 9 | 1,0 | 0,085 | 20 | 0,07 | schwerentflammbar |

*Forsetzung der Tabelle*

| Beispiel | $\dfrac{\text{Steglänge}}{\text{Stegdicke}}$ | Stegdichte $g \cdot cm^{-3}$ |
|---|---|---|
| 1 | >15 | >1,3 |
| 2 | >10 | >1,3 |
| 3 | >10 | >1,3 |
| 4 | >10 | >1,3 |
| 5 | >12 | >1,3 |
| 6 | >12 | >1,3 |
| 7 | >15 | >1,3 |
| 8 | >10 | >1,3 |
| 9 | >25 | >1,3 |

**Patentansprüche**

1. Verfahren zur Herstellung von elastischen Schaumstoffen auf Basis eines Melamin/Formaldehyd-Kondensationsproduktes durch Verschäumen einer wässerigen Lösung oder Dispersion, welche ein Melamin/Formaldehyd-Vorkondensat, einen Emulgator, ein flüchtiges Treibmittel und einen Härter sowie ggf. übliche Zusatzstoffe enthält, und anschliessendes Aushärten des Schaums, dadurch gekennzeichnet, dass

a) die Konzentration des Vorkondensats in der Mischung aus Vorkondensat und Wasser (ohne Zusatzstoffe) so gewählt wird, dass sie oberhalb der Knickstelle der 1. Ableitung der Kurve liegt, die man erhält, wenn man unter Konstanthaltung aller anderen Bedingungen in der Mischung aus Vorkondensat und Wasser die Wassermenge variiert, und dann die Viskosität der Mischung (gemessen bei der Siedetemperatur des Treibmittels unter den Bedingungen, die zu Beginn des Schäumvorgangs herrschen) aufträgt gegen die Konzentration des Vorkondensats, wobei aber die Konzentration des Vorkondensats nicht höher sein darf als der Wert, der in der beschriebenen Kurve einer Viskosität von 5000 dPas entspricht,

b) während des Schäumvorgangs bis zu dem Zeitpunkt, zu dem der Schaum 80% der maximal erreichbaren Steighöhe erreicht hat, die Viskosität der wässerigen Lösung oder Dispersion einerseits den Wert nicht unterschreiten darf, welcher in der unter a beschriebenen Kurve der dort definierten Mindestkonzentration entspricht, und andererseits 6000 dPas nicht überschreiten darf, und

c) nach Erreichen des unter b definierten Zeitpunktes die Viskosität durch Aushärten des Vorkondensats innerhalb von 8 min den Wert von 10 000 dPas übersteigt,
wobei in b und c die Viskositäten immer an einem parallel-laufenden treibmittelfreien System gemessen werden.

2. Verfahren nach Anspruch 1, dadurch gekennzeichnet, dass der Schaumstoff 1 bis 180 min lang auf Temperaturen zwischen 120 und 300°C erhitzt wird, wobei Wasser, Treibmittel und Formaldehyd weitgehend entfernt werden, und eine weitere Aushärtung erfolgt.

3. Verfahren nach Anspruch 1, dadurch gekennzeichnet, dass man den Schaumstoff, ggf. vor oder nach der Temperaturbehandlung nach Anspruch 2, ein oder mehrere Male um 40 bis 90% seiner ursprünglichen Höhe zusammenpresst und dann wieder ausdehnen lässt.

4. Verfahren nach Anspruch 1, dadurch gekennzeichnet, dass man den Schaumstoff mit 1 oder 2 Deckschichten versieht.

## Revendications

1. Procédé de fabrication de masses alvéolaires élastiques, à base d'un produit de condensation mélamine/formaldéhyde, par expansion d'une solution ou dispersion aqueuse qui contient un précondensat mélamine/formaldéhyde, un émulsifiant, un gonflant volatil et un durcisseur, ainsi qu'éventuellement des additifs usuels, puis par durcissement complet du produit alvéolaire, caractérisé par le fait que

a) la concentration du précondensat dans le mélange de précondensat et d'eau (sans additifs) est choisie pour qu'elle se situe au-dessus du joint anguleux de la dérivée première de la courbe qu'on obtient quand on fait varier la quantité d'eau dans le mélange du précondensat et d'eau, en maintenant constantes toutes les autres conditions, puis qu'on reporte la viscosité du mélange (mesurée à la température d'ébullition du gonflant, dans les conditions qui règnent au début de l'expansion) en fonction de la concentration du précondensat, la concentration du précondensat ne devant toutefois pas être supérieure à la valeur qui, sur la courbe décrite, correspond à une viscosité de 5000 dPas;

b) pendant l'expansion, jusqu'au moment où le produit alvéolaire a atteint 80% de sa hauteur de montée maximale, la viscosité de la solution ou dispersion aqueuse, d'une part, ne doit pas dépasser vers le bas la valeur qui, sur la courbe définie sous a correspond à la concentration minimale qui y est définie et, d'autre part, ne doit pas dépasser vers le haut 6000 dPas;

c) après avoir atteint le moment défini sous b, la viscosité, par durcissement complet du précondensat en l'espace de 8 min, dépasse 10 000 dPas, les viscosités, sous b et c, étant toujours mesurées sur un système se déroulant parallèlement, exempt de gonflant.

2. Procédé selon la revendication 1, caractérisé par le fait que le produit alvéolaire est chauffé pendant 1 à 180 min à des températures comprises entre 120 et 300°C, l'eau, le gonflant et le formaldéhyde étant éliminés dans une large mesure, et un nouveau durcissement se produit.

3. Procédé selon la revendication 1, caractérisé par le fait qu'on comprime le produit alvéolaire, éventuellement avant ou après le traitement à température selon la revendication 2, une ou plusieurs fois jusqu'à 40 à 90% de sa hauteur initiale, puis qu'on le laisse s'expanser à nouveau.

4. Procédé selon la revendication 1, caractérisé par le fait que l'on munit le produit alvéolaire d'une ou deux couches de recouvrement.

## Claims

1. A process for the preparation of a resilient foam based on a melamine/formaldehyde condensate by foaming an aqueous solution or dispersion, which contains a melamine/formaldehyde precondensate, an emulsifier, a volatile blowing agent and a curing agent, with or without conventional additives, and then curing the foam, wherein

a) the concentration of the precondensate in the mixture of precondensate and water (without additives) is selected to be above the salient point of the 1st derivative of the curve which is obtained when, keeping all other conditions constant, the amount of water in the mixture of precondensate and water is varied and the viscosity of the mixture (measured at the boiling point of the blowing agent under the conditions prevailing at the start of foaming) is plotted against the concentration of the precondensate, which concentration must however not be higher than the value which in the curve described corresponds to a viscosity of 5,000 dPas,

b) during the foaming process, up to the time at which the foam has reached 80% of the maximum attainable rise height, the viscosity of the aqueous solution or dispersion must not fall below the value which, in the curve described under a, corresponds to the minimum concentration defined there, but must not exceed 6,000 dPas, and

c) after reaching the time defined under b, the viscosity exceeds a value of 10,000 dPas, due to curing of the precondensate, within 8 min,
the viscosities referred to in b and c being measured, in each case, on a parallel system which is free from blowing agent.

2. A process as claimed in claim 1, wherein the foam is heated at from 120 to 300°C for from 1 to 180 min, during which water, blowing agent and formaldehyde are substantially removed and further curing takes place.

3. A process as claimed in claim 1, wherein the foam is compressed, before or after the heat treatment of claim 2, once or several times by from 40 to 90% of its original height, and is then allowed to re-expand.

4. A process as claimed in claim 1, wherein the foam is provided with 1 or 2 covering layers.

FIG.3

FIG.2

FIG.1